**Europäisches Patentamt**

**European Patent Office**

**Office européen des brevets**

(19)

(11)     **EP 1 176 829 A1**

(12)                    **EUROPEAN PATENT APPLICATION**

(43) Date of publication:
   **30.01.2002 Bulletin 2002/05**

(51) Int Cl.$^7$: **H04N 7/26**

(21) Application number: **01300863.6**

(22) Date of filing: **31.01.2001**

(84) Designated Contracting States:
   **AT BE CH CY DE DK ES FI FR GB GR IE IT LI LU MC NL PT SE TR**
   Designated Extension States:
   **AL LT LV MK RO SI**

(30) Priority: **28.07.2000 US 221553 P**
   **25.09.2000 KR 2000056150**

(71) Applicant: **SAMSUNG ELECTRONICS CO., LTD.**
   **Suwon-City, Kyungki-do (KR)**

(72) Inventor: **Shim, Woo-sung**
   **Taen-eub, Hwaseong-gun, Kyungki-do (KR)**

(74) Representative: **Geary, Stuart Lloyd et al**
   **Venner, Shipley & Co., 20 Little Britain**
   **London EC1A 7DH (GB)**

(54)    **Motion estimation**

(57)    A motion estimation method, estimates a likely direction of motion on the basis of a set of MAD values for blocks neighbouring a central block. This information is then used to select a region for further more refined searching. The process may be performed iteratively.

# FIG. 5

**Description**

The present invention relates to a motion estimation method comprising calculating a difference value representing the difference between an image block and a central block of a search area.

There are four kinds of redundancies which must be effectively removed for high-compression coding of moving pictures. First, there is redundancy existing in signal constituents. Second, there is statistical redundancy due to the statistical probability of data generation. Third, there is time redundancy between pictures. Fourth, there is spatial redundancy within the pictures.

The redundancy existing in the signal constituents can be reduced by using a signal having a rate of brightness to chromaticity of 2:1. The statistical redundancy can be reduced by variable length coding which reduces the average number of bits using the probability of data generation during the coding. The spatial redundancy can be reduced by a discrete cosine transformation (DCT). The time redundancy which is generated much in the moving pictures can be reduced by motion estimation (ME) and motion compensation (MC).

According to one example of conventional motion estimation methods to reduce redundancy, a full search (FS) is used as a block matching algorithm. When the full search is used as the block matching algorithm, the complexity of an encoder depends on a motion estimation algorithm. This method shows the highest compressibility in coding the moving pictures. However, the overall performance of a coder is low due to excessive computational complexity.

According to another motion estimation method to solve the above problems, computational complexity is decreased on the basis of well-known 3-step or 4-step search. These methods search for a block which is the most similar to a current block, comparing the current block with all blocks within a fixed search region. The 3-step search method can relatively simply and exactly estimate motion.

However, a motion estimation method which can perform fast block matching by reducing computational complexity is still required.

A motion estimation method according to the present invention is characterised by calculating difference values representing the difference between said image block and blocks of said search area which neighbour said central block and selecting a region of said search area for further finer grained searching using a motion direction estimation produced in dependence on said difference values. Preferably, the direction estimation is produced on the basis that the most likely direct is that corresponds to a smallest difference value, which may be a difference value for one of said blocks or an estimated difference for an intermediate block.

Preferably, said neighbouring blocks overlap said central block.

Preferably, said difference values are mean absolute difference values.

Preferably, said motion direction estimation can have values corresponding to no direction, 0°, 45°, 90°, 135°, 180°, 225°, 270° and 315°.

A method of motion estimation may comprise iteratively performing a method according to the present invention such that the displacement of said neighbouring blocks from said central block is reduced with each iteration. Preferably, the iteration is halted if the motion direction estimation indicates no direction of motion.

An embodiment of the present invention will now be described, by way of example, with reference to the accompanying drawings in which:

Figure 1 is a flowchart illustrating the major steps of a motion estimation method according to the present invention;
Figures 2a, 2b, 2c and 2d show motion vector distributions in each image sequence of four quadrature common intermediate formats (QCIF), such as "Carphone," "Foreman," "Mom & Daughter," and " Susie";
Figure 3 illustrates a treatment process of the first step;
Figure 4a shows an example where eight search points are determined on all blocks existing in 100 frames of each test image of "Carphone" and "Mom & Daughter" in order to investigate a correlation between a search point having the smallest MAD value and neighbouring search points;
Figures 4b and 4c show the result of calculating an average MAD value at the corresponding search point; and
Figure 5 illustrates an example of estimating a motion vector (7,1).

The preferred embodiments will be described on the basis of 3-step motion estimation.

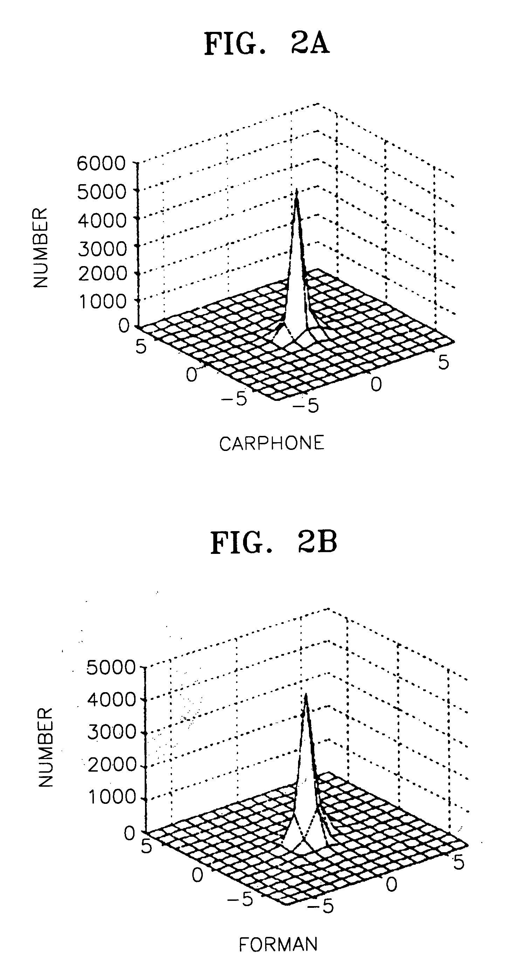

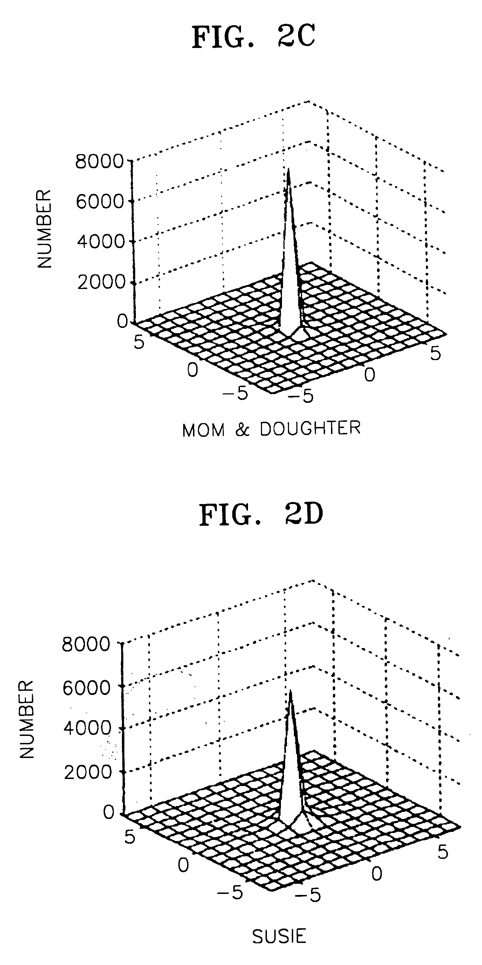

A motion estimation method according to the present invention, first, utilizes the fact that, for example, about 70 % of a motion vector is concentrated on a motion vector coordinate (0,0) within moving pictures of 20-30 frames per second. Figures 2a, 2b, 2c, and 2d illustrate motion vector distributions of four quadrature common intermediate formats (QCIF) of "Carphone," "Foreman," "Mom & Daughter," and "Susie" in image sequence. Referring to Figure 2, the motion vector distributions are concentrated around (0,0).

Second, the motion estimation method according to the present invention considers a correlation between search points. Particularly, the method considers that most motion vectors tend to move toward where the predetermined mean square difference (MSD) or a mean absolute difference (MAD) becomes a minimum, and it is easy to search at the local minimum point. Therefore, if an arbitrary search point is determined as the local minimum point, the point is determined as a point for a motion vector. If not, a correlation between the neighbouring search points is used on the basis of the MAD value, so that the computational complexity of the search is decreased. Also, the preferred embodiments of the invention utilizes the fact that, if the difference of the MAD values between the neighbouring search points is small in a certain direction, there is a large possibility that motion exists in that direction. In this way, in the preferred embodiments of the present invention, the difference between the MAD value and the neighbouring search points is used as a correlation between a search point and the neighbouring search points.

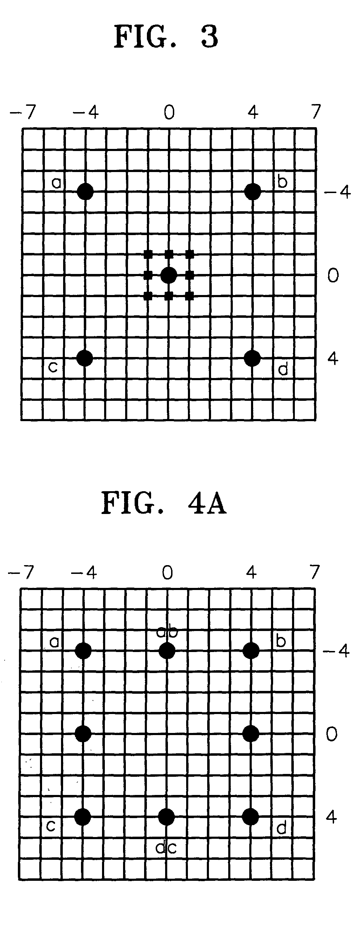

As shown in Figure 3, four search points (a, b, c, d) ±4 pixel-displaced from the search centre point are determined as new search points. Next, MAD values are calculated at the search points determined in the first step (step 102). Next, for each MAD value, it is determined whether that MAD value is the smallest value at the centre point (o) (step 104). The step 104 can be understood as a step for determining whether the direction of a motion vector is toward the central point or not. If the MAD is a minimum at the centre point (o), eight new search points which are ± 1 pixel-displaced are introduced (step 110), and MAD values are calculated on the introduced search points and a displacement vector of a search point having the smallest MAD value is determined as a motion vector (step 112).

If the MAD value of the centre point (o) is not a minimum in the step (104), and the smallest MAD value exists at the search points (a, b, c, d), a direction of motion is determined using a correlation between the neighbouring search points. That is, if the smallest MAD value exists at the search points (a, b, c, d), a new search point is determined for the second step on the basis of the correlation between the neighbouring search points (step 120).

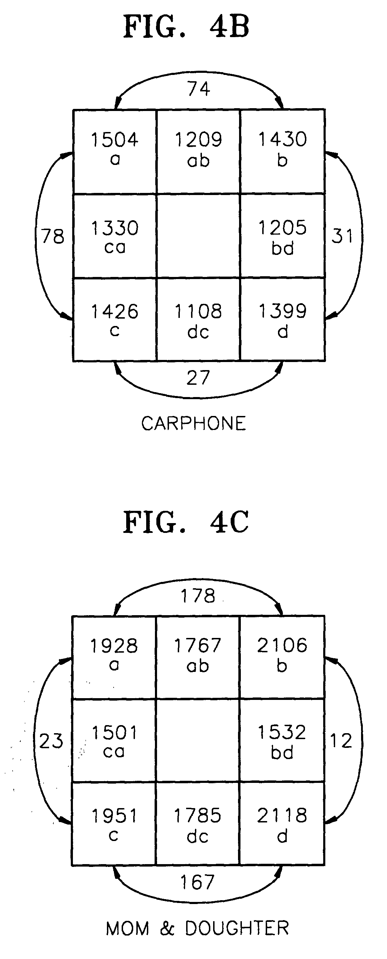

Figure 4a illustrates an example in which eight search points are determined on all blocks which exist in 100 frames of each of the test images of "Carphone" and "Mom & Daughter" in order to investigate the correlation between the least difference search point and the neighbouring search points, and Figures 4b and 4c illustrate the result of calculating the average MAD value at the corresponding search point.

Referring to Figure 4b, the search point (d) is the lowest MAD point, $|MAD(d)-MAD(c)|$ is 27, and $|MAD(d)-MAD(b)|$ is 31, so that $|MAD(d)-MAD(c)|<|MAD(d)-MAD(b)|$. This means that the MAD value of the point (dc) between points (d) and (c) is smaller than the MAD value of the point (bd) between points (a) and (d), and also it statistically shows that the MAD value becomes smaller in the direction in which the difference value is small.

Also, referring to Figure 4c, the search point (a) is the point with the lowest MAD, $|MAD(a)-MAD(b)|$ is 178, and $|MAD(a)-MAD(c)|$ is 23, so that $|MAD(a)-MAD(b)|> |MAD(a)- MAD(c)|$. This means that the MAD value of the point (ca) is smaller than the MAD value of (ab). The correlation between the search points can also formed when points (b), (c), or (d) are the points with the lowest MAD value.

That is, if one of the search points (a, b, c, d), except the search points corresponding to the centre (o) of a macro block in the first step, is determined is determined to have the smallest MAD value, a motion estimation method according to the present invention uses a correlation between the neighbouring search points for the estimation of motion vector direction constituents. In the preferred embodiments, an absolute difference between the MAD value of a search point having the smallest MAD value and MAD values of the neighbouring search points is used in a correlation between a search point having the smallest MAD value and the neighbouring search points. That is, a search point of the next step and a motion are estimated according to the following formulae.

$$|MAD(a) - MAD(b)| = |MAD(a) - MAD(c)| \qquad (1)$$

$$|MAD(a) - MAD(b)| > |MAD(a) - MAD(c)| \qquad (2)$$

$$|MAD(a) - MAD(b)| < |MAD(a) - MAD(c)| \qquad (3)$$

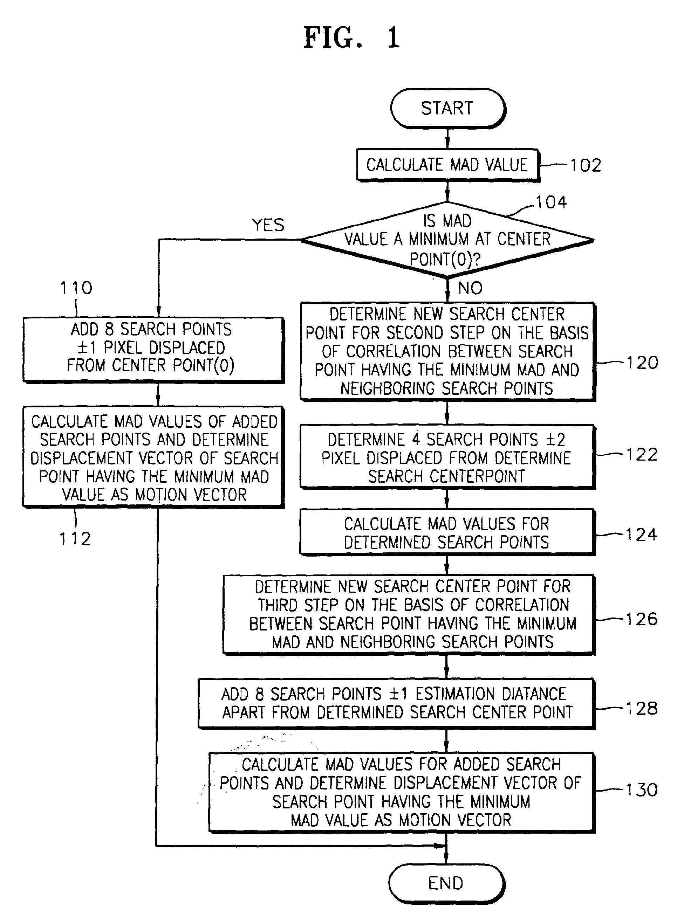

If Formula 1 is satisfied, eight search points ± 1 pixel-displaced from the search point (a) are determined, and a displacement value of a search point having the least MAD is determined as a motion vector, not shown in Figure 1.

Also, as shown in Figure 4a, if Formula 2 is satisfied, a middle point (ca) between the search points (a) and (c) is newly determined, and the second step is performed according to the result of comparing and calculating other search points.

$$MAD(a) = MAD(ca) \qquad (4)$$

$$MAD(a) > MAD(ca) \hspace{3cm} (5)$$

$$MAD(a) < MAD(ca) \hspace{3cm} (6)$$

If Formula 4 is not satisfied, eight search points ±1 pixel-displaced from a middle point between the search points (a) and (ac) are newly configured, and a displacement vector of a search point having the smallest MAD is determined as a motion vector. Also, if Formula 5 is satisfied, the point (ca) is determined as a new search centre point for the second step. Next, four search points ±2 pixel-displaced from the new search centre point (ca) are determined. If Formula 6 is satisfied, the point (a) is determined as a new search centre point for the second step. Next, four search points ±2 pixel-displaced from the new search centre point (a) are determined. That is, four search points ±2 pixel-displaced from a newly determined search centre point are determined (step 122).

Next, MAD values are calculated at the search points determined in the step 122 (step 124). Next, a new search centre point is determined for the third step on the basis of a correlation between a search point having the smallest MAD value and the neighbouring search points from the result of calculation of the step 124 (step 126). Next, in the third step, eight search points ±1 pixel-displaced from the determined search centre point are introduced (step 128). Then, MAD values are calculated on the introduced search points, and a displacement vector of the search point having the smallest MAD value is determined as a motion vector (step 130).

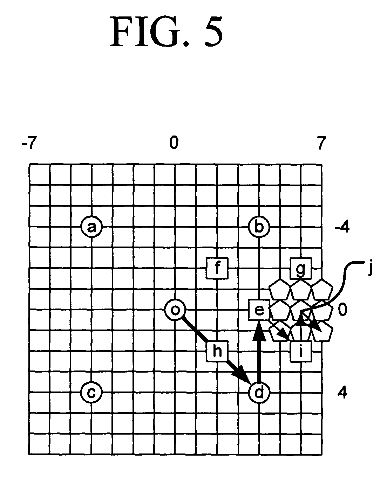

Referring to Figure 5, in the first step, the smallest MAD value corresponds to the case where a search point is not the point (o) but the point (d). According to the present invention, in this case, a correlation between the neighbouring search points is used. Analyzing the correlation, $|MAD(d) - MAD(c)| > |MAD(d) - MAD(b)|$ is satisfied, so that the MAD of a middle point (e) between the search points (b) and (d) is calculated. The MAD of the search point (b) is larger than the MAD of the search point (e); therefore, the search point (e) is determined as a new search point for the second step, and four search points ±2 pixel-displaced from the search centre point (e) are determined, and then, the second step is performed. If a search point (i) has the smallest MAD, and $|MAD(i) - MAD(h)| > |MAD(i) - MAD(g)|$ is satisfied, the MAD of a middle point (j) between search points (i) and (g) is calculated. Because the MAD(g) is larger than the MAD(j), eight search points ± 1 pixel-displaced from the search centre point (j) are introduced in the third step. In the last step, the optimum point (7,1) is given, and a motion vector is determined using the distance from the optimum point.

If the process is finished in the first step, the smallest number of search points is "5+8=13". If a motion vector is determined through all steps, the smallest number of search points is "5+1+4+1+8=19".

A mock experiment is performed for evaluating the performance of the conventional motion estimation method and the motion estimation method of the present invention. The objects of comparison are a full search method (FSM) which estimates a motion most exactly, a 3-step search (3SS) which estimates a motion relatively fast, and a 4-step search (4SS) which is recently known to have good performance. An average search point (ASP) per macro block is chosen as a head for comparing computational complexity. Table 1 shows results of comparing the ASP.

Table 1

|  | Carphone | Foreman | Mom & Daughter | Susie |
|---|---|---|---|---|
| FSM | 225 | 225 | 225 | 225 |
| 3SS | 25 | 25 | 25 | 25 |
| 4SS | 17.0249 | 17.2818 | 17.0039 | 17.5189 |
| Present Invention | 13.6019 | 13.6512 | 13.2085 | 13.5189 |

Referring to Table 1, a motion estimation method according to the present invention has a smaller ASP per macro block than the conventional motion estimation methods (FSM, 3SS, 4SS). That is, the motion estimation method according to the present invention remarkably reduces computational complexity, and enhances image compression speed.

Also, a PSNR which is expressed as in decibels (db) is used as a head for comparing precision of motion estimation. Table 2 shows results of measuring an average PSNR for 100 frames of each test image.

Table 2

|  | Carphone | Foreman | Mom & Daughter | Susie |
|---|---|---|---|---|
| FSM | 32.1984 | 30.619 | 37.4603 | 35.3273 |
| 3SS | 31.9917 | 30.2156 | 37.3863 | 35.0973 |
| 4SS | 31.9952 | 30.2805 | 37.3922 | 35.0892 |
| Present Invention | 31.9009 | 30.3276 | 37.3896 | 34.9263 |

Referring to Table 2, a motion estimation method according to the present invention does not degrade the quality of pictures as much during image compression when compared to conventional motion estimation methods (FSM, 3SS, 4SS).

Also, the motion estimation method according to the present invention can be made into a program which is performed on a personal computer or a server computer. Program codes and code segments forming the program can be easily inferred by computer programmers skilled in the art. Also, the program can be stored on computer-readable recording media. The recording media may be magnetic recording media, optical recording media, or broadcast media.

**Claims**

1. A motion estimation method comprising calculating a difference value representing the difference between an image block and a central block of a search area, **characterised by** calculating difference values representing the difference between said image block and blocks of said search area which neighbour said central block and selecting a region of said search area for further finer grained searching using a motion direction estimation produced in dependence on said difference values.

2. A method according to claim 1, wherein said neighbouring blocks overlap said central block.

3. A method according to claim 1 or 2, wherein said difference values are mean absolute difference values.

4. A method according to any preceding claim, wherein said motion direction estimation can have values corresponding to no direction, 0°, 45°, 90°, 135°, 180°, 225°, 270° and 315°.

5. A method of motion estimation comprising iteratively performing a method according to any preceding claim, wherein the displacement of said neighbouring blocks from said central block is reduced with each iteration.

6. A method according to claim 5, wherein the iteration is halted if the motion direction estimation indicates no direction of motion.

7. A motion estimation method comprising the steps of:

   (a) calculating a mean absolute difference (MAD) at a centre point of a search block and neighbouring search points;
   (b) performing motion estimation around the centre point if the centre point has the smallest MAD value; and
   (c) performing motion estimation using a correlation between the neighbouring search points if the centre point does not have the smallest MAD value.

8. The method of claim 7, wherein the step (b) comprises the steps of:

   (b-1) introducing a predetermined number of new search points displaced with a predetermined pixel distance from the centre point if the centre point is determined to have the smallest MAD value in the step (a); and
   (b-2) calculating MAD values of the introduced search points and determining a displacement vector of a search point having the smallest MAD value as a motion vector.

9. The method of claim 7, wherein the step (c) comprises:

(c-1) determining a direction of a motion using a correlation between the neighbouring search points if the centre point is determined not to have the smallest MAD value in the step (a).

**10.** The method of claim 9, wherein the correlation is based on an absolute difference between an MAD value of a search point having the smallest MAD value and MAD values of the neighbouring search points.

**11.** The method of claim 7, wherein the step (c) comprises;

(c-1) determining new search points for the second step on the basis of the correlation between the neighbouring search points if the smallest MAD value is at one of the neighbouring search points;
(c-2) calculating MAD values at the search points determined in the step (c-1); and
(c-3) determining a new search centre point for the third step on the basis of the correlation between the search point having the smallest MAD value and the neighbouring search points in the results of the step (c-2).

**12.** The method of claim 11, wherein the step (c-3) comprises:

(c-3-1) selecting a middle point between the centre point and the neighbouring search points in the direction where the absolute difference between the MAD value of the centre point and the MAD value of one of the neighbouring search points is small; and
(c-3-2) calculating an MAD value at the middle point and the centre point, and determining the one of the middle point and the centre point having the smaller MAD value as a new search point.

**13.** The method of any one of claims 7 through 12, wherein the mean absolute difference (MAD) is a mean square difference (MSD).

**14.** The method of either claim 11 or claim 12 further comprising after the step (c-3):

(c-4) introducing a predetermined number of search points a predetermined estimation distance apart from the newly determined search centre point; and
(c-5) calculating MAD values on the introduced search points, and determining a displacement vector of a search point having the smallest MAD value as a motion vector.

**15.** The method of one of the claim 14, wherein the mean absolute difference (MAD) is a mean square difference (MSD).

**16.** A video compression apparatus including processing means, wherein the processing means is configured to compress image data using a motion estimation method according to any preceding claim.

# FIG. 1

START

CALCULATE MAD VALUE ——102

IS MAD VALUE A MINIMUM AT CENTER POINT(0)? ——104

YES

NO

**110**

ADD 8 SEARCH POINTS ±1 PIXEL DISPLACED FROM CENTER POINT(0)

CALCULATE MAD VALUES OF ADDED SEARCH POINTS AND DETERMINE DISPLACEMENT VECTOR OF SEARCH POINT HAVING THE MINIMUM MAD VALUE AS MOTION VECTOR

**112**

DETERMINE NEW SEARCH CENTER POINT FOR SECOND STEP ON THE BASIS OF CORRELATION BETWEEN SEARCH POINT HAVING THE MINIMUM MAD AND NEIGHBORING SEARCH POINTS ——120

DETERMINE 4 SEARCH POINTS ±2 PIXEL DISPLACED FROM DETERMINE SEARCH CENTERPOINT ——122

CALCULATE MAD VALUES FOR DETERMINED SEARCH POINTS ——124

DETERMINE NEW SEARCH CENTER POINT FOR THIRD STEP ON THE BASIS OF CORRELATION BETWEEN SEARCH POINT HAVING THE MINIMUM MAD AND NEIGHBORING SEARCH POINTS ——126

ADD 8 SEARCH POINTS ±1 ESTIMATION DIATANCE APART FROM DETERMINED SEARCH CENTER POINT ——128

CALCULATE MAD VALUES FOR ADDED SEARCH POINTS AND DETERMINE DISPLACEMENT VECTOR OF SEARCH POINT HAVING THE MINIMUM MAD VALUE AS MOTION VECTOR ——130

END

# FIG. 2A

CARPHONE

# FIG. 2B

FORMAN

# FIG. 2C

MOM & DOUGHTER

# FIG. 2D

SUSIE

# FIG. 3

# FIG. 4A

# FIG. 4B

|  74 (top) | | |
|---|---|---|
| 1504 a | 1209 ab | 1430 b |
| 1330 ca |  | 1205 bd |
| 1426 c | 1108 dc | 1399 d |

78 (left) · 31 (right) · 27 (bottom)

CARPHONE

# FIG. 4C

|  178 (top) | | |
|---|---|---|
| 1928 a | 1767 ab | 2106 b |
| 1501 ca |  | 1532 bd |
| 1951 c | 1785 dc | 2118 d |

23 (left) · 12 (right) · 167 (bottom)

MOM & DOUGHTER

# FIG. 5

**European Patent Office**

# EUROPEAN SEARCH REPORT

Application Number

EP 01 30 0863

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PO L-M ET AL: "EXPRESS LETTERS A NOVEL FOUR-STEP SEARCH ALGORITHM FOR FAST BLOCK MOTION ESTIMATION" IEEE TRANSACTIONS ON CIRCUITS AND SYSTEMS FOR VIDEO TECHNOLOGY, IEEE INC. NEW YORK, US, vol. 6, no. 3, 1 June 1996 (1996-06-01), pages 313-316, XP000592426 ISSN: 1051-8215 | 1-6 | H04N7/26 |
| A | * page 314, column 1, paragraph 2 - column 2, paragraph 2 * | 7-16 | |
| X | KOGA T ET AL: "MOTION-COMPENSATED INTERFRAME CODING FOR VIDEO CONFERENCING" NATIONAL TELECOMMUNICATIONS CONFERENCE. (N.T.C.) NEW ORLEANS, NOVEMBER 29 - DECEMBER 3 1981, NEW YORK, I.E.E.E, US, vol. 4 CONF. 1981, 3 November 1981 (1981-11-03), pages G5301-G5305, XP000989476 * page G.5.3.2, column 1, last paragraph - column 2; figure 3 * | 1-6 | |
| | | | TECHNICAL FIELDS SEARCHED (Int.Cl.7) |
| | | | H04N G06T |
| X | PLANSKY H ET AL: "BILDDATENREDUKTION UND IHRE ANWENDUNG BEI HDTV" FREQUENZ, SCHIELE UND SCHON GMBH. BERLIN, DE, vol. 46, no. 3 / 4, 1 March 1992 (1992-03-01), pages 102-109, XP000305494 ISSN: 0016-1136 * page 105, column 1, last paragraph - page 106, column 2, paragraph 1 * | 1-6 | |

-/--

The present search report has been drawn up for all claims

| Place of search | Date of completion of the search | Examiner |
|---|---|---|
| BERLIN | 8 November 2001 | Raeymaekers, P |

EPO FORM 1503 03.82 (P04C01)

**European Patent Office**

# EUROPEAN SEARCH REPORT

Application Number

EP 01 30 0863

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CHEN M C ET AL: "MOTION VECTOR OPTIMIZATION OF CONTROL GRID INTERPOLATION AND OVERLAPPED BLOCK MOTION COMPENSATION USING ITERATIVE DYNAMIC PROGRAMMING" SIGNAL PROCESSING: THEORIES AND APPLICATIONS, PROCEEDINGS OF EUSIPCO, XX, XX, 10 September 1996 (1996-09-10), pages 1095-1098, XP000922875 * abstract * ----- | 2 | |

| | | | TECHNICAL FIELDS SEARCHED (Int.Cl.7) |
|---|---|---|---|

The present search report has been drawn up for all claims

| Place of search | Date of completion of the search | Examiner |
|---|---|---|
| BERLIN | 8 November 2001 | Raeymaekers, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)